# EUROPEAN PATENT APPLICATION

(11) **EP 4 701 306 A1**
(43) Date of publication of application: **25.02.2026**
(21) Application number: 24803003.3
(22) Date of filing: 08.05.2024
(51) Int. Cl.: H04W 72/21, H04W 72/12, H04W 72/0446

(54) **UCI BIT DESIGN METHOD AND APPARATUS**

(30) Priority: 11.05.2023 CN 202310537445
(71) Applicant: Huawei Technologies Co., Ltd., Shenzhen, Guangdong 518129 (CN)
(72) Inventor: XU, Rui, Shenzhen, Guangdong 518129 (CN); PANG, Xu, Shenzhen, Guangdong 518129 (CN); QIN, Yi, Shenzhen, Guangdong 518129 (CN); MA, Siqi, Shenzhen, Guangdong 518129 (CN); CAO, Youlong, Shenzhen, Guangdong 518129 (CN)
(74) Representative: Maiwald GmbH
(86) International application number: PCT/CN2024/091668
(87) International publication number: WO 2024/230723

(57) **Abstract**

A UCI bit design method is provided. An application scope of a UCI bit is configured to be a part of CG transmission occasions in a CG period by using configuration information, and the UCI bit indicates a used CG transmission occasion and/or an unused CG transmission occasion in the part of CG transmission occasions, thereby reducing bit overheads of UCI.

## Description

### TECHNICAL FIELD

This application relates to the field of communication technologies, and in particular, to an uplink control information (uplink control information, UCI) bit design method and an apparatus.

### BACKGROUND

In a wireless communication network, extended reality (extended reality, XR) technologies have advantages such as multi-view and strong interactivity, can provide brand-new visual experience for users, and have great application values and great commercial potential. XR includes technologies such as virtual reality (virtual reality, VR), augmented reality (augmented reality, AR), and mixed reality (mixed reality, MR), and can be widely applied to a plurality of fields such as entertainment, gaming, medical care, advertising, industry, online education, and engineering.

A configured grant (configured grant, CG) is suitable for transmission of periodic services, for example, XR services, and uplink control information (uplink control information, UCI) may indicate a CG transmission occasion used in a CG period and/or a CG transmission occasion unused in the CG period, thereby reducing a waste of CG transmission occasion resources. Because the UCI is sensitive to bit overheads, how to reduce indication overheads of the UCI is an urgent problem to be resolved.

### SUMMARY

According to a first aspect, an embodiment of this application provides a communication method. The method may be performed by a terminal, may be performed by a module (for example, a processor, a chip, or a chip system) used in the terminal, or may be implemented by a logical node, a logical module, or software that can implement all or some functions of the terminal. The method includes: obtaining first configuration information, where the first configuration information is used for configuring an application scope of first indication information, the application scope of the first indication information is a part of configured grant (configured grant, CG) transmission occasions in a CG period, and the first indication information indicates a used CG transmission occasion and/or an unused CG transmission occasion in the part of CG transmission occasions; and sending the first indication information.

According to the foregoing method, the first configuration information used for configuring the application scope of the first indication information is obtained, and the application scope of the first indication information is the part of CG transmission occasions in a CG periodicity. In this case, the first indication information indicates the used CG transmission occasion and/or the unused CG transmission occasion in the part of CG transmission occasions. This avoids a waste of CG transmission occasion resources in the CG period, and can effectively reduce bit overheads of the first indication information.

With reference to the first aspect, in some implementations of the first aspect, the first configuration information may be included in downlink control information (downlink control information, DCI) carried on a physical downlink control channel (physical downlink control channel, PDCCH), may be carried on a medium access control control element (media Access Control control element, MAC CE), or may be carried on radio resource control (radio resource control, RRC) layer signaling. The first indication information may be included in uplink control information (uplink control information, UCI) carried on the used CG transmission occasion. For example, the first indication information may be included in UCI carried on all or a part of used CG transmission occasions.

With reference to the first aspect, in some implementations of the first aspect, the first configuration information configures a time offset, the part of CG transmission occasions are in a first period, and a start moment of the first period is related to the time offset. In the foregoing implementation, the first period is determined by using the time offset, and the application scope of the first indication information is determined by using the first period, so that the bit overheads of the first indication information can be effectively reduced.

With reference to the first aspect, in some implementations of the first aspect, the start moment of the first period is after a sending moment of the first indication information, an interval between the start moment of the first period and the sending moment of the first indication information is equal to the time offset, and an end moment of the first period is an end moment of the CG period or an end moment of a last CG transmission occasion in the CG period. In the foregoing implementation, the application scope of the first indication information is determined by using the first period, so that the bit overheads of the first indication information can be effectively reduced.

With reference to the first aspect, in some implementations of the first aspect, the part of CG transmission occasions may be in the first period. If the start moment of the first period is included in a CG transmission occasion in the CG period, the part of CG transmission occasions in the first period may not include the CG transmission occasion. In the foregoing implementation, the application scope of the first indication information is determined by using the first period, so that the bit overheads of the first indication information can be effectively reduced.

With reference to the first aspect, in some implementations of the first aspect, the part of CG transmission occasions may alternatively be in a second period, where a start moment of the second period is the sending moment of the first indication information, and an end moment of the second period is the end moment of the CG period or the end moment of the last CG transmission occasion in the CG period. The part of CG transmission occasions in the second period may include a CG transmission occasion including the first indication information, or may not include the CG transmission occasion including the first indication information. This is not limited in this application. In this manner, a number of bits of the first indication information dynamically changes based on the sending moment of the first indication information, so that the bit overheads of the first indication information can be flexibly and effectively reduced.

With reference to the first aspect, in some implementations of the first aspect, the number of bits of the first indication information is N1, N1 is a positive integer, a number of the part of CG transmission occasions is M1, and M1 is an integer greater than or equal to N1. Optionally, M1 is an integer multiple of N1. In this manner, the number of bits of the first indication information is less than or equal to the number of the part of CG transmission occasions, so that the bit overheads of the first indication information can be further reduced.

With reference to the first aspect, in some implementations of the first aspect, M1 is an integer multiple of N1, M1=N1, the first indication information indicates, by using a bitmap, the used CG transmission occasion and/or the unused CG transmission occasion in the part of CG transmission occasions, and one bit in the bitmap corresponds to one CG transmission occasion in the part of CG transmission occasions. Values "1" and "0"of the bit respectively indicate that the CG transmission occasion is used and the CG transmission occasion is unused. Alternatively, the values "0" and "1" of the bit respectively indicate that the CG transmission occasion is used and the CG transmission occasion is unused. In this manner, the used CG transmission occasion and/or the unused CG transmission occasion in the part of CG transmission occasions may be indicated by one bit in the first indication information, thereby achieving a beneficial effect of fully and accurately indicating the used CG transmission occasion and/or the unused CG transmission occasion in the part of CG transmission occasions.

With reference to the first aspect, in some implementations of the first aspect, M1 is an integer multiple of N1, M1=k*N1, and k is an integer greater than 1. The first indication information indicates, by using the bitmap, the used CG transmission occasion and/or the unused CG transmission occasion in the part of CG transmission occasions, and one bit in the bitmap corresponds to k CG transmission occasions in the part of CG transmission occasions. Values "1" and "0" of the bit respectively indicate that the k CG transmission occasions are used and the k CG transmission occasions are unused. Alternatively, the values "0" and "1" of the bit respectively indicate that the k CG transmission occasions are used and the k CG transmission occasions are unused. In this manner, the bit overheads of the first indication information can be further reduced.

With reference to the first aspect, in some implementations of the first aspect, the first configuration information configures a number N2 of bits of the first indication information, and N2 is a positive integer. One bit in the N2 bits of the first indication information indicates that one or more CG transmission occasions in the part of CG transmission occasions are used or unused. For example, each bit in the N2 bits of the first indication information indicates that the one or more CG transmission occasions in the part of CG transmission occasions are used or unused. In this manner, a base station may configure the number of bits of the first indication information by using the first configuration information based on a capability of the base station to process the first indication information and a capability of the base station to schedule, to another terminal for use, the unused CG transmission occasion indicated by the first indication information, so that the number of bits of the first indication information is configured without delivering the foregoing capabilities of the base station, thereby effectively avoiding exposure of capability information of the base station.

With reference to the first aspect, in some implementations of the first aspect, the part of CG transmission occasions are last M2 CG transmission occasions in the CG period, and M2 is an integer greater than or equal to N2. Optionally, M2 is an integer multiple of N2. In the foregoing implementation, the number of bits of the first indication information is less than or equal to the number of the part of CG transmission occasions, so that the bit overheads of the first indication information can be further reduced.

With reference to the first aspect, in some implementations of the first aspect, M2 is an integer multiple of N2, M2=N2, the first indication information indicates, by using the bitmap, the used CG transmission occasion and/or the unused CG transmission occasion in the part of CG transmission occasions, and one bit in the bitmap corresponds to one CG transmission occasion in the part of CG transmission occasions. Values "1" and "0"of the bit respectively indicate that the CG transmission occasion is used and the CG transmission occasion is unused. Alternatively, the values "0" and "1" of the bit respectively indicate that the CG transmission occasion is used and the CG transmission occasion is unused. In this manner, the used CG transmission occasion and/or the unused CG transmission occasion in the part of CG transmission occasions may be indicated by one bit in the first indication information, thereby achieving a beneficial effect of fully and accurately indicating the used CG transmission occasion and/or the unused CG transmission occasion in the part of CG transmission occasions.

With reference to the first aspect, in some implementations of the first aspect, M2 is an integer multiple of N2, M2=k*N2, and k is an integer greater than 1. The first indication information indicates, by using the bitmap, the used CG transmission occasion and/or the unused CG transmission occasion in the part of CG transmission occasions, and one bit in the bitmap corresponds to k CG transmission occasions in the part of CG transmission occasions. Values "1" and "0" of the bit respectively indicate that the k CG transmission occasions are used and the k CG transmission occasions are unused. Alternatively, the values "0" and "1" of the bit respectively indicate that the k CG transmission occasions are used and the k CG transmission occasions are unused. In this manner, the bit overheads of the first indication information can be further reduced.

According to a second aspect, an embodiment of this application provides a communication method. The method may be performed by a radio access network device, may be performed by a module (for example, a processor, a chip, or a chip system) used in the radio access network device, or may be implemented by a logical node, a logical module, or software that can implement all or some functions of the radio access network device. The method includes: sending first configuration information, where the first configuration information is used for configuring an application scope of first indication information, and the application scope of the first indication information is a part of CG transmission occasions in a CG period; and obtaining the first indication information, where the first indication information indicates a used CG transmission occasion and/or an unused CG transmission occasion in the part of CG transmission occasions.

According to the foregoing method, the first configuration information used for configuring the application scope of the first indication information is obtained, and the application scope of the first indication information is the part of CG transmission occasions in a CG periodicity. In this case, the first indication information indicates the used CG transmission occasion and/or the unused CG transmission occasion in the part of CG transmission occasions. This avoids a waste of CG transmission occasion resources in the CG period, and can effectively reduce bit overheads of the first indication information.

With reference to the second aspect, in some implementations of the second aspect, the first configuration information may be included in DCI carried on a PDCCH, may be carried on a MAC CE, or may be carried on RRC signaling. The first indication information may be included in UCI carried on the used CG transmission occasion. For example, the first indication information may be included in UCI carried on all or a part of used CG transmission occasions.

With reference to the second aspect, in some implementations of the second aspect, the first configuration information configures a time offset, the part of CG transmission occasions are in a first period, and a start moment of the first period is related to the time offset. In the foregoing implementation, the first period is determined by using the time offset, and the application scope of the first indication information is determined by using the first period, so that the bit overheads of the first indication information can be effectively reduced.

With reference to the second aspect, in some implementations of the second aspect, the start moment of the first period is after a sending moment of the first indication information, an interval between the start moment of the first period and the sending moment of the first indication information is equal to the time offset, and an end moment of the first period is an end moment of the CG period or an end moment of a last CG transmission occasion in the CG period. In the foregoing implementation, the application scope of the first indication information is determined by using the first period, so that the bit overheads of the first indication information can be effectively reduced.

With reference to the second aspect, in some implementations of the second aspect, the part of CG transmission occasions may be in the first period. If the start moment of the first period is included in a CG transmission occasion in the CG period, the part of CG transmission occasions in the first period may not include the CG transmission occasion. In the foregoing implementation, the application scope of the first indication information is determined by using the first period, so that the bit overheads of the first indication information can be effectively reduced.

With reference to the second aspect, in some implementations of the second aspect, the part of CG transmission occasions may alternatively be in a second period, where a start moment of the second period is the sending moment of the first indication information, and an end moment of the second period is the end moment of the CG period or the end moment of the last CG transmission occasion in the CG period. The part of CG transmission occasions in the second period may include a CG transmission occasion including the first indication information, or may not include the CG transmission occasion including the first indication information. This is not limited in this application. In this manner, a number of bits of the first indication information dynamically changes based on the sending moment of the first indication information, so that the bit overheads of the first indication information can be flexibly and effectively reduced.

With reference to the second aspect, in some implementations of the second aspect, the number of bits of the first indication information is N1, N1 is a positive integer, a number of the part of CG transmission occasions is M1, and M1 is an integer greater than or equal to N1. Optionally, M1 is an integer multiple of N1. In this manner, the number of bits of the first indication information is less than or equal to the number of the part of CG transmission occasions, so that the bit overheads of the first indication information can be further reduced.

With reference to the second aspect, in some implementations of the second aspect, M1 is an integer multiple of N1, M1=N1, the first indication information indicates, by using a bitmap, the used CG transmission occasion and/or the unused CG transmission occasion in the part of CG transmission occasions, and one bit in the bitmap corresponds to one CG transmission occasion in the part of CG transmission occasions. Values "1" and "0"of the bit respectively indicate that the CG transmission occasion is used and the CG transmission occasion is unused. Alternatively, the values "0" and "1" of the bit respectively indicate that the CG transmission occasion is used and the CG transmission occasion is unused. In this manner, the used CG transmission occasion and/or the unused CG transmission occasion in the part of CG transmission occasions may be indicated by one bit in the first indication information, thereby achieving a beneficial effect of fully and accurately indicating the used CG transmission occasion and/or the unused CG transmission occasion in the part of CG transmission occasions.

With reference to the second aspect, in some implementations of the second aspect, M1 is an integer multiple of N1, M1=k*N1, and k is an integer greater than 1. The first indication information indicates, by using the bitmap, the used CG transmission occasion and/or the unused CG transmission occasion in the part of CG transmission occasions, and one bit in the bitmap corresponds to k CG transmission occasions in the part of CG transmission occasions. Values "1" and "0" of the bit respectively indicate that the k CG transmission occasions are used and the k CG transmission occasions are unused. Alternatively, the values "0" and "1" of the bit respectively indicate that the k CG transmission occasions are used and the k CG transmission occasions are unused. In this manner, the bit overheads of the first indication information can be further reduced.

With reference to the second aspect, in some implementations of the second aspect, the first configuration information configures a number N2 of bits of the first indication information, and N2 is a positive integer. One bit in the N2 bits of the first indication information indicates that one or more CG transmission occasions in the part of CG transmission occasions are used or unused. For example, each bit in the N2 bits of the first indication information indicates that the one or more CG transmission occasions in the part of CG transmission occasions are used or unused. In this manner, a base station may configure the number of bits of the first indication information by using the first configuration information based on a capability of the base station to process the first indication information and a capability of the base station to schedule, to another terminal for use, the unused CG transmission occasion indicated by the first indication information, so that the number of bits of the first indication information is configured without delivering the foregoing capabilities of the base station, thereby effectively avoiding exposure of capability information of the base station.

With reference to the second aspect, in some implementations of the second aspect, the part of CG transmission occasions are last M2 CG transmission occasions in the CG period, and M2 is an integer greater than or equal to N2. Optionally, M2 is an integer multiple of N2. In the foregoing implementation, the number of bits of the first indication information is less than or equal to the number of the part of CG transmission occasions, so that the bit overheads of the first indication information can be further reduced.

With reference to the second aspect, in some implementations of the second aspect, M2 is an integer multiple of N2, M2=N2, the first indication information indicates, by using the bitmap, the used CG transmission occasion and/or the unused CG transmission occasion in the part of CG transmission occasions, and one bit in the bitmap corresponds to one CG transmission occasion in the part of CG transmission occasions. Values "1" and "0"of the bit respectively indicate that the CG transmission occasion is used and the CG transmission occasion is unused. Alternatively, the values "0" and "1" of the bit respectively indicate that the CG transmission occasion is used and the CG transmission occasion is unused. In this manner, the used CG transmission occasion and/or the unused CG transmission occasion in the part of CG transmission occasions may be indicated by one bit in the first indication information, thereby achieving a beneficial effect of fully and accurately indicating the used CG transmission occasion and/or the unused CG transmission occasion in the part of CG transmission occasions.

With reference to the second aspect, in some implementations of the second aspect, M2 is an integer multiple of N2, M2=k*N2, and k is an integer greater than 1. The first indication information indicates, by using the bitmap, the used CG transmission occasion and/or the unused CG transmission occasion in the part of CG transmission occasions, and one bit in the bitmap corresponds to k CG transmission occasions in the part of CG transmission occasions. Values "1" and "0" of the bit respectively indicate that the k CG transmission occasions are used and the k CG transmission occasions are unused. Alternatively, the values "0" and "1" of the bit respectively indicate that the k CG transmission occasions are used and the k CG transmission occasions are unused. In this manner, the bit overheads of the first indication information can be further reduced.

According to a third aspect, an embodiment of this application provides an apparatus. The apparatus may implement the method according to any one of the first aspect or the possible implementations of the first aspect. The apparatus includes a corresponding unit or module configured to perform the method. The unit or module included in the apparatus can be implemented by software and/or hardware. The apparatus may be, for example, a terminal, may be a chip, a chip system, a processor, or the like that supports the terminal in implementing the method, or may be a logical node, a logical module, or software that can implement all or some functions of the terminal.

According to a fourth aspect, an embodiment of this application provides an apparatus. The apparatus may implement the method according to any one of the second aspect or the possible implementations of the second aspect. The apparatus includes a corresponding unit or module configured to perform the method. The unit or module included in the apparatus can be implemented by software and/or hardware. The apparatus may be, for example, a radio access network device, may be a chip, a chip system, a processor, or the like that supports the radio access network device in implementing the method, or may be a logical node, a logical module, or software that can implement all or some functions of the radio access network device.

According to a fifth aspect, an embodiment of this application provides an apparatus, including a processor. The processor is coupled to a memory. The memory is configured to store instructions. When the instructions are executed by the processor, the apparatus is enabled to implement the method according to any one of the first aspect or the possible implementations of the first aspect.

According to a sixth aspect, an embodiment of this application provides an apparatus, including a processor. The processor is coupled to a memory. The memory is configured to store instructions. When the instructions are executed by the processor, the apparatus is enabled to implement the method according to any one of the second aspect or the possible implementations of the second aspect.

According to a seventh aspect, an embodiment of this application provides a computer-readable storage medium. The computer-readable storage medium stores instructions. When the instructions are executed, a computer is enabled to perform the method according to any one of the first aspect or the possible implementations of the first aspect.

According to an eighth aspect, an embodiment of this application provides a computer-readable storage medium. The computer-readable storage medium stores instructions. When the instructions are executed, a computer is enabled to perform the method according to any one of the second aspect or the possible implementations of the second aspect.

According to a ninth aspect, an embodiment of this application provides a computer program product. The computer program product includes computer program code. When the computer program code is run on a computer, the computer is enabled to perform the method according to any one of the first aspect or the possible implementations of the first aspect.

According to a tenth aspect, an embodiment of this application provides a computer program product. The computer program product includes computer program code. When the computer program code is run on a computer, the computer is enabled to perform the method according to any one of the second aspect or the possible implementations of the second aspect.

According to an eleventh aspect, an embodiment of this application provides a chip, including a processor. The processor is coupled to a memory. The memory is configured to store instructions. When the instructions are executed by the processor, the chip is enabled to implement the method according to any one of the first aspect, the second aspect, the possible implementations of the first aspect, or the possible implementations of the second aspect.

According to a twelfth aspect, an embodiment of this application provides a communication system, including the apparatus according to the third aspect and the apparatus according to the fourth aspect.

According to a thirteenth aspect, an embodiment of this application provides a communication system, including the apparatus according to the fifth aspect and the apparatus according to the sixth aspect.

It may be understood that, for beneficial effects of the features corresponding to the first aspect and the second aspect in the third aspect to the thirteenth aspect, refer to related descriptions in the first aspect and the second aspect. Details are not described again.

### BRIEF DESCRIPTION OF DRAWINGS

FIG. 1 is a diagram of a communication system to which an embodiment is applied according to this application;
FIG. 2 to FIG. 5 are diagrams of several system frameworks to which embodiments of this application are applicable;
FIG. 6 is a diagram of video frame arrival;
FIG. 7 is a diagram of a CG;
FIG. 8 is a diagram of a plurality of CG transmission occasions configured in one CG period;
FIG. 9 is a diagram of CG transmission occasions, indicated by UCI, used and unused in a CG period;
FIG. 10 and FIG. 11 are diagrams of using bitmaps to indicate, by UCI, CG transmission occasions used and unused in CG periods;
FIG. 12 is a diagram of a communication method according to an embodiment of this application;
FIG. 13 and FIG. 14 are diagrams in which first indication information indicates CG transmission occasions used and unused in first periods according to embodiments of this application;
FIG. 15 and FIG. 16 are diagrams in which first indication information indicates CG transmission occasions used and unused in second periods according to embodiments of this application;
FIG. 17 is a diagram in which first indication information indicates CG transmission occasions used and unused in a CG period according to an embodiment of this application;
FIG. 18 is a diagram of a structure of a terminal according to an embodiment of this application; and
FIG. 19 and FIG. 20 are diagrams of apparatuses according to embodiments of this application.

### DESCRIPTION OF EMBODIMENTS

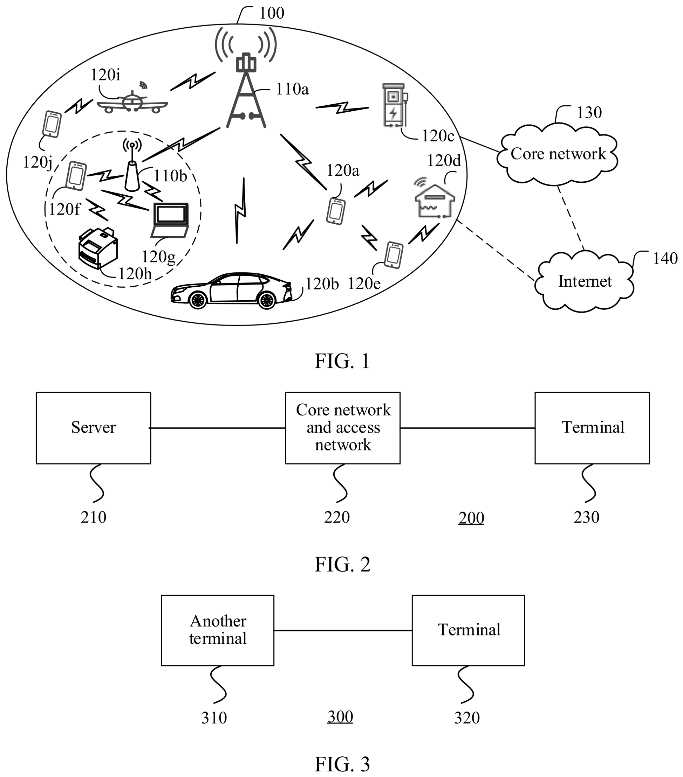

FIG. 1 is a diagram of an architecture of a communication system to which an embodiment of this application is applied. As shown in FIG. 1, the communication system 10 includes a radio access network (radio access network, RAN) 100 and a core network (core network, CN) 130. Optionally, the communication system 10 may further include an internet 140. The RAN 100 may include at least one RAN node (for example, 110a and 110b in FIG. 1, collectively referred to as 110) and at least one terminal (for example, 120a to 120j in FIG. 1, collectively referred to as 120). The RAN 100 may also include another RAN node, for example, a wireless relay device and/or a wireless backhaul device (not shown in FIG. 1). The terminal 120 is connected to the RAN node 110 in a wireless manner. The RAN node 110 is connected to the core network 130 in a wireless or wired manner. A core network device in the core network 130 and the RAN node 110 in the RAN 100 may be different independent physical devices, may be a same physical device that integrates a core network logical function and a radio access network logical function, or may be a device that integrates a part of core network logical functions and a part of radio access network logical functions. Terminals may be connected to each other in a wired or wireless manner and RAN nodes may be connected to each other in a wired or wireless manner. FIG. 1 is merely a diagram. The communication system may further include other network devices, for example, a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, an open access network (open RAN, O-RAN, or ORAN) system, a cloud radio access network (cloud radio access network, CRAN) system, a wireless-fidelity (wireless-fidelity, Wi-Fi) system, a communication system related to a 3rd generation partnership project (3rd generation partnership project, 3GPP), and another communication system of this type, or may be a communication system integrating the foregoing two or more systems.

The RAN node may also have different expressions, for example, a radio access network device. In this application, unless otherwise specified, the radio access network device is used for expression in the following. The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in the Wi-Fi system, or the like, or may be a module or a unit that completes some functions of the base station, for example, may be a central unit (central unit, CU) or a distributed unit (distributed unit, DU). The radio access network device may be a macro base station (for example, 110a in FIG. 1), may be a micro base station or an indoor base station (for example, 110b in FIG. 1), may be a relay node or a donor node, or the like; or may be a radio controller in a CRAN scenario. Optionally, the radio access network device may alternatively be a server, a wearable device, a vehicle, a vehicle-mounted device, or the like. For example, an access network device in a vehicle-to-everything (vehicle-to-everything, V2X) technology may be a road side unit (road side unit, RSU). It may be understood that all or some functions of the radio access network device in this application may also be implemented by using a software function running on hardware, or may be implemented by using an instantiated virtualization function on a platform (for example, a cloud platform). Alternatively, the radio access network device in this application may be a logical node, a logical module, or software that can implement all or some functions of the radio access network device.

In another possible scenario, a plurality of radio access network devices cooperate to assist the terminal in implementing radio access, and different radio access network devices respectively implement some functions of the base station. For example, the radio access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module. A specific technology and a specific device form that are used by the radio access network device are not limited in embodiments of this application. For ease of description, the following provides descriptions by using an example in which the base station is used as the radio access network device.

The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, remote medical, a smart grid, smart furniture, a smart office, smart wearable, smart transportation, and a smart city. The terminal may be a mobile phone, a tablet, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access the network through the Wi-Fi system, the 5G system, or another system.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, an airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal. That is, 110a and 120i communicate with each other by using a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in an application scenario of the foregoing terminal, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to a terminal, where the sidelink information is carried on a sidelink channel. The information may be control information, or may be data information.

XR technologies have advantages such as multi-view and strong interactivity, can provide brand-new experience for users, and have great application values and great commercial potential. XR includes technologies such as VR, AR, and MR, and can be widely applied to a plurality of fields such as entertainment, gaming, medical care, advertising, industry, online education, and engineering. The VR technology is mainly to render visual and audio scenarios, to simulate sensory stimulation of a vision and audio in a real world to the user as much as possible. The VR technology usually requires the user to wear the XR terminal (for example, the head mounted device) to simulate vision and/or hearing of the user. The VR technology may further perform action tracking on the user, to update simulated visual and/or auditory content in a timely manner. An AR technology is mainly to provide additional visual and/or auditory information or manually generated content in a real environment perceived by the user. The user may directly (where for example, sensing, processing, and rendering is not performed) or indirectly (where for example, transfer is performed through a sensor or the like) perceive the real environment, and further enhancement processing is performed. An MR technology is to insert some virtual elements into a physical scenario, to provide immersive experience for the user by adding these elements as a part of a real scenario.

Embodiments provided in this application are applicable to a plurality of different scenarios. FIG. 2 to FIG. 5 are diagrams of several system frameworks to which embodiments of this application are applicable.

FIG. 2 is a diagram of a scenario to which an embodiment of this application is applicable. FIG. 2 shows a system 200, including a server 210, a core network and access network 220 (which may be referred to as a transport network 220 for short, for example, an LTE network, a 5G network, or a 6G network), and a terminal 230. The server 210 may be configured to: encode, decode, and render XR source data. The transport network 220 may be configured to perform transmission of XR data. The terminal 230 provides diversified XR experience for a user by processing the XR data. It may be understood that another apparatus may be further included between the transport network 220 and the terminal 230. For example, another terminal (for example, a mobile phone, a notebook computer, or a vehicle-mounted terminal) and/or a network device (for example, a relay device, an integrated access backhaul (integrated access backhaul, IAB) device, a Wi-Fi router, or a Wi-Fi access point) may be further included. The terminal 230 obtains the XR data from the transport network 220 through the another terminal and/or the network device.

FIG. 3 is a diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data to the terminal 320. For another example, the another terminal 310 and the terminal 320 are vehicle-mounted terminals, and the XR data may be exchanged between the vehicle-mounted terminals. It may be understood that the another terminal 310 may be further connected to a transport network (for example, an LTE network, a 5G network, or a 6G network), to obtain XR data from the transport network, or send data to the transport network.

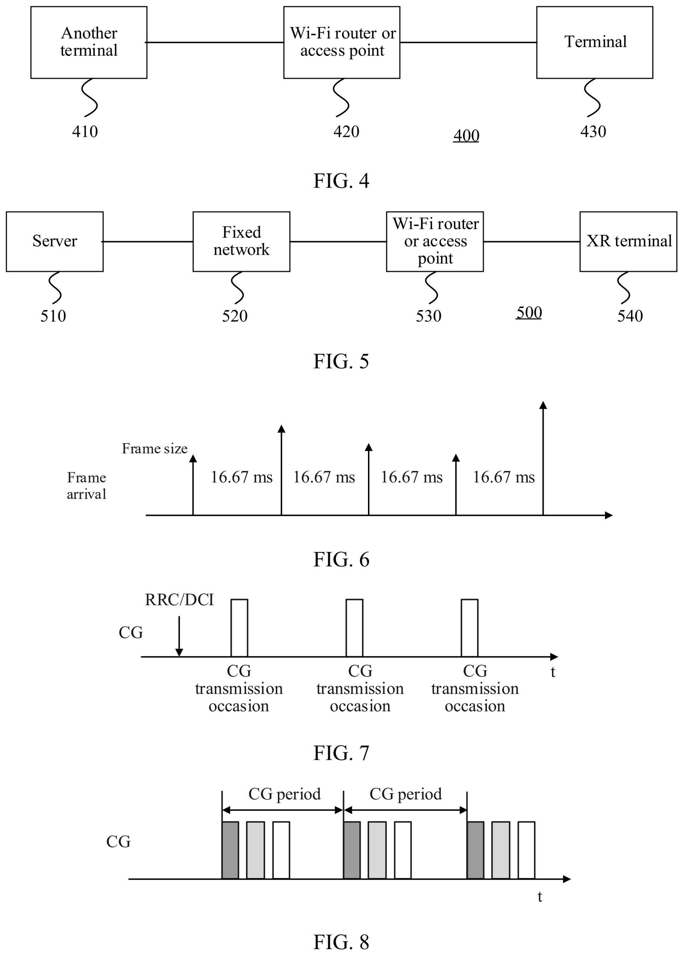

FIG. 4 is a diagram of another scenario to which an embodiment of this application is applicable. FIG. 4 shows a system 400, including a terminal 430, a Wi-Fi router or Wi-Fi access point 420 (which may be referred to as a Wi-Fi apparatus 420 for short), and another terminal 410. The another terminal 410 is a terminal other than the terminal 430. The another terminal 410 may transmit XR data to the terminal 430 through the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data to the television device, the smart screen device, or the electronic tablet device through the Wi-Fi router, the Wi-Fi access point, or the set-top box, and present the XR data to a user.

FIG. 5 is a diagram of another scenario to which an embodiment of this application is applicable. FIG. 5 shows a system 500, including a server 510, a fixed network 520, a Wi-Fi router or Wi-Fi access point 530 (which may be referred to as a Wi-Fi apparatus 530 for short), and a terminal 540. The server 510 may be configured to: encode, decode, and render XR source data, and transmit XR data to the terminal 540 through the fixed network 520 and the Wi-Fi apparatus 530. For example, the fixed network 520 is an operator network, the Wi-Fi apparatus 530 is the Wi-Fi router, the Wi-Fi access point, or a set-top box, and the server 510 transmits or projects the XR data to the terminal 540 through the operator network 520 and the Wi-Fi apparatus 530.

It may be understood that FIG. 2 to FIG. 5 are merely examples of several scenarios to which embodiments of this application are applicable, and are not intended to limit a scenario to which embodiments of this application are applicable.

The following describes the technical solutions of this application with reference to the accompanying drawings.

For an XR transmission service and a video transmission service, service data arrival is usually performed periodically based on a frame rate. As shown in FIG. 6, for a video with a frame rate of 60 frames per second (frame per second, FPS), in an ideal case, picture frame arrival is performed at an interval of 16.67 milliseconds (milliseconds, ms) (which may also be expressed as a frame period of 16.67 ms), and a data amount of the picture frame arrival may be different (where a higher arrow height in the figure indicates a larger data amount, and a lower arrow height indicates a smaller data amount). A common frame rate of a video frame is 30 FPS, 60 FPS, 90 FPS, or 120 FPS, and a corresponding frame period is 33.33 ms, 16.67 ms, 11.11 ms, or 8.33 ms respectively.

For the XR transmission service and the video transmission service, a data transmission amount of the XR transmission service and the video transmission service is usually large. For example, a size of a 4K video frame is approximately 30 to 100 kilobits (kilobits, kb). In addition, sizes of different video frames usually vary. Because each video frame has a different compression rate and a different frame type, the sizes of the video frames vary greatly.

Different XR services usually have different service models. A scene content display change in VR is usually caused by a posture or a position (action). A VR service mainly uploads position and posture information, and a data amount is small, and usually, is merely dozens of kilobits/second (kilobits per second, Kbps). Different from that in VR, a scene content display change in AR is caused by a change of a fixation focus target and a change of a spatial relationship (an action) between a position and a fixation point. Content uploaded by an AR service includes visual information (including a depth) needed for perception. Therefore, uplink transmission of the AR service is mainly for a clear and stable picture or video stream, and a data amount is large, or may be for some extracted environment feature information. Usually, an uplink rate required for initial experience of an interactive AR service is approximately 2 Mbps, and therefore, an uplink rate required for advanced experience is 10 to 20 Mbps. Therefore, in comparison with the VR service, the AR service has a higher requirement on an uplink transmission rate, making uplink transmission more challenging.

A configured grant (configured grant, CG) (which may also be referred to as a configured scheduling (configured scheduling, CS)) is suitable for periodic service transmission. The CG refers to that in a transmission process, a CG transmission occasion is allocated by using radio resource control (radio resource control, RRC) layer signaling or downlink control information (downlink control information, DCI), and then the scheduling resource may be used for data transmission periodically. The foregoing CG transmission occasion may also have different expressions, for example, a configured grant physical uplink shared channel (configured grant physical uplink shared channel, CG PUSCH), a PUSCH, or a CG occasion. In this application, unless otherwise specified, the CG transmission occasion is used for expression in the following.

For example, as shown in FIG. 7, in an uplink transmission process of an CG, a CG transmission occasion is allocated by using RRC signaling or DCI, and then the CG transmission occasion is used for data transmission periodically.

There are two types of the CG. In a type 1, related parameters of CG transmission, for example, a CG periodicity, and a time domain resource and a frequency domain resource of the CG are configured by using the RRC signaling, and corresponding CG resources are activated by using the RRC signaling. In a type 2, a related parameter of CG transmission, for example, a CG periodicity, is configured by using the RRC signaling, and a corresponding CG resource is configured and activated by using the DCI. Generally, only one CG transmission occasion can be configured in one CG period. This may also be understood as that only one transport block (transport block, TB) can be transmitted in one CG period. For an XR transmission service whose data transmission amount dynamically changes greatly and whose data transmission amount is large, configuring one CG transmission occasion in one CG period may fail to complete data transmission. For the foregoing problem, a method of configuring a plurality of CG transmission occasions in one CG period may be used to resolve the problem. For example, as shown in FIG. 8, three CG transmission occasions are configured in one CG period, and rectangles in different colors in the figure are different CG transmission occasions. It may be understood that a size relationship of the plurality of CG transmission occasions in the CG period is not limited in embodiments of this application.

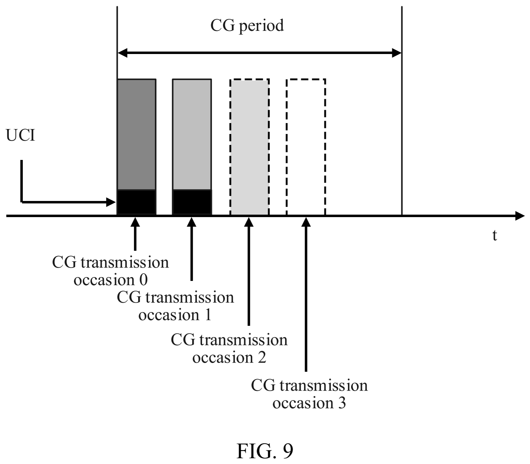

If a plurality of CG transmission occasions are configured in one CG period, transmission resources included in the plurality of CG transmission occasions are CG transmission resources in the CG period. If a size of the CG transmission resources is smaller than a size of an XR transmission frame, another transmission resource needs to be dynamically scheduled for transmission of remaining data of the XR transmission frame. This introduces an extra delay and affects transmission performance. In order to avoid the foregoing delay, a large CG transmission resource may be configured in one CG period. However, this causes a waste of transmission resources when the XR transmission frame is small. A problem of the waste of transmission resources may be resolved by sending UCI. For example, the UCI may be referred to as XR uplink control information (extended reality uplink control information, XR-UCI). The UCI may also be referred to as unused transmission occasion uplink control information (unused transmission occasion uplink control information, UTO-UCI). A name of the UCI is not limited in this application. The UCI indicates a CG transmission occasion used in a CG period and/or a CG transmission occasion unused in the CG period, and the UCI may be carried on the used CG transmission occasion. For example, the UCI may be carried on all or a part of used CG transmission occasions. After receiving the UCI sent by a terminal, a base station may schedule, to another terminal for use, the unused CG transmission occasion indicated by the UCI, thereby avoiding the waste of transmission resources. For example, as shown in FIG. 9, four CG transmission occasions: CG transmission occasions 0 to 3, are configured in one CG period. In the figure, a rectangle with a solid-line frame indicates that a CG transmission occasion represented by the rectangle is used, and a rectangle with a dashed-line frame indicates that a CG transmission occasion represented by the rectangle is unused. UCI is carried on used CG transmission occasions: the CG transmission occasion 0 and the CG transmission occasion 1. The UCI carried on the CG transmission occasion 0 or the CG transmission occasion 1 indicates two CG transmission occasions used in the foregoing CG period: the CG transmission occasion 0 and the CG transmission occasion 1, and two CG transmission occasions unused in the foregoing CG period: the CG transmission occasion 2 and the CG transmission occasion 3. After receiving the UCI, the base station may schedule the CG transmission occasion 2 and the CG transmission occasion 3 to the another terminal for use.

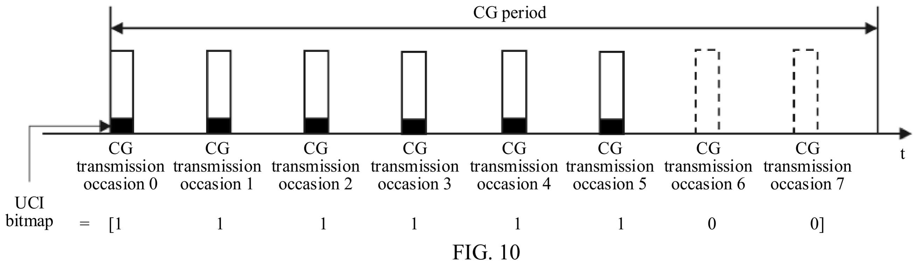

In a possible implementation of the UCI, the UCI indicates, by using a bitmap (bitmap), a CG transmission occasion used in a CG period and/or a CG transmission occasion unused in the CG period, where one bit in the bitmap corresponds to one CG transmission occasion. A value 1 of the bit indicates that the CG transmission occasion corresponding to the bit is used; and a value 0 of the bit indicates that the CG transmission occasion corresponding to the bit is unused. Alternatively, the value 0 of the bit indicates that the CG transmission occasion corresponding to the bit is used; and the value 1 of the bit indicates that the CG transmission occasion corresponding to the bit is unused. For example, as shown in FIG. 10, eight CG transmission occasions: CG transmission occasions 0 to 7, are configured in one CG period. In the figure, a rectangle with a solid-line frame indicates that a CG transmission occasion represented by the rectangle is used, and a rectangle with a dashed-line frame indicates that a CG transmission occasion represented by the rectangle is unused. UCI is carried on used CG transmission occasions: CG transmission occasions 0 to 5. The UCI carried on the CG transmission occasion 0, the CG transmission occasion 1, the CG transmission occasion 2, the CG transmission occasion 3, the CG transmission occasion 4, or the CG transmission occasion 5 indicates, by using a bitmap [1 1 1 1 1 1 00], the used CG transmission occasions and unused CG transmission occasions in the CG transmission occasions 0 to 7. One bit such as "1" or "0" in the bitmap corresponds to one used or unused CG transmission occasion. The UCI indicates that the CG transmission occasions used in the CG period are the CG transmission occasions 0 to 5, and the CG transmission occasions unused in the CG period are the CG transmission occasion 6 and the CG transmission occasion 7.

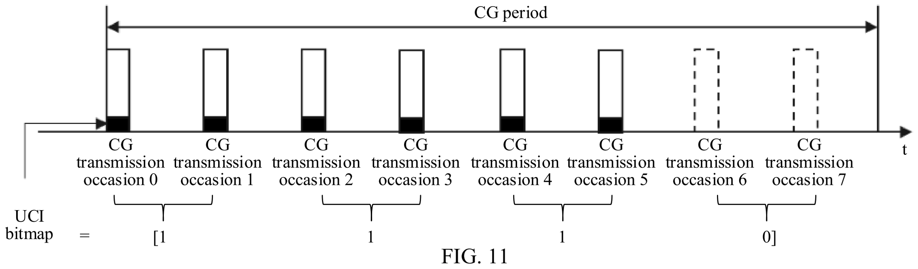

In another possible implementation of the UCI, the UCI indicates, by using a bitmap (bitmap), a CG transmission occasion used in a CG period and/or a CG transmission occasion unused in the CG period, where one bit in the bitmap corresponds to a plurality of CG transmission occasions. A value 1 of the bit indicates that the plurality of CG transmission occasions corresponding to the bit are used; and a value 0 of the bit indicates that the plurality of CG transmission occasions corresponding to the bit are unused. Alternatively, the value 0 of the bit indicates that the plurality of CG transmission occasions corresponding to the bit are used; and the value 1 of the bit indicates that the plurality of CG transmission occasions corresponding to the bit are unused. For example, as shown in FIG. 11, eight CG transmission occasions: CG transmission occasions 0 to 7, are configured in one CG period. In the figure, a rectangle with a solid-line frame indicates that a CG transmission occasion represented by the rectangle is used, and a rectangle with a dashed-line frame indicates that a CG transmission occasion represented by the rectangle is unused. UCI is carried on used CG transmission occasions: CG transmission occasions 0 to 5. The UCI carried on the CG transmission occasion 0, the CG transmission occasion 1, the CG transmission occasion 2, the CG transmission occasion 3, the CG transmission occasion 4, or the CG transmission occasion 5 indicates, by using a bitmap [1 1 1 0], the used CG transmission occasions and unused CG transmission occasions in the CG transmission occasions 0 to 7. One bit such as "1" or "0" in the bitmap corresponds to two used or unused CG transmission occasions. The UCI indicates that the CG transmission occasions used in the CG period are the CG transmission occasions 0 to 5, and the CG transmission occasions unused in the CG period are the CG transmission occasion 6 and the CG transmission occasion 7.

The UCI may be sent by the terminal to the base station. After receiving the UCI, the base station needs to process the UCI to obtain information about the CG transmission occasion used in the CG period and/or the CG transmission occasion unused in the CG period, and may schedule, by using RRC signaling or DCI to the another terminal for use, the unused CG transmission occasion indicated by the UCI. Because the UCI is sensitive to bit overheads, how to reduce indication overheads of the UCI is an urgent problem to be resolved.

This application provides a UCI bit design method. An application scope of the UCI is configured, so that the UCI indicates a used CG transmission occasion and/or an unused CG transmission occasion in the application scope, to achieve a beneficial effect of reducing the bit overheads of the UCI.

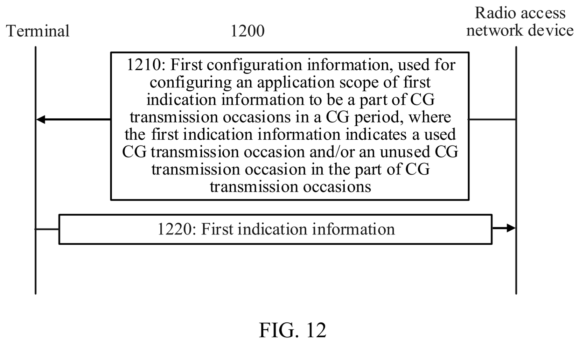

FIG. 12 is an interaction diagram of a communication method 1200 according to an embodiment of this application. In FIG. 12, the method is illustrated by using an example in which a radio access network device and a terminal perform interaction. However, an execution body of the interaction is not limited in this application. For example, the radio access network device in FIG. 12 may be a module (for example, a chip, a chip system, or a processor) used in the radio access network device, or may be a logical node, a logical module, or software that can implement all or some functions of the radio access network device. The terminal in FIG. 12 may be a module (for example, a chip, a chip system, or a processor) used in the terminal, to implement the method, or may be a logical node, a logical module, or software that can implement all or some functions of the terminal. As shown in FIG. 12, the method 1200 in this embodiment may include a part 1210 and a part 1220.

Part 1210: The radio access network device sends first configuration information to the terminal, and correspondingly, the terminal obtains the first configuration information, where the first configuration information is used for configuring an application scope of first indication information, the application scope of the first indication information is a part of CG transmission occasions in a CG period, and the first indication information indicates a used CG transmission occasion and/or an unused CG transmission occasion in the part of CG transmission occasions. The first configuration information may be included in DCI carried on a physical downlink control channel (physical downlink control channel, PDCCH), may be carried on a medium access control control element (media Access Control control element, MAC CE), or may be carried on RRC signaling.

Part 1220: The terminal sends the first indication information to the radio access network device, and correspondingly, the radio access network device obtains the first indication information. The first indication information may be included in UCI carried on the used CG transmission occasion. For example, the first indication information may be included in UCI carried on all or a part of used CG transmission occasions. The first indication information may indicate, by using a bitmap, the used CG transmission occasion and/or the unused CG transmission occasion in the part of CG transmission occasions, and one bit in the bitmap corresponds to one or more CG transmission occasions in the part of CG transmission occasions. Values "1" and "0"of the bit respectively indicate that the one or more CG transmission occasions are used and the one or more CG transmission occasions are unused. Alternatively, the values "0" and "1" of the bit respectively indicate that the one or more CG transmission occasions are used and the one or more CG transmission occasions are unused.

In the method 1200, the terminal obtains the first configuration information used for configuring the application scope of the first indication information, and the application scope of the first indication information is the part of CG transmission occasions in the CG period. In this case, the first indication information indicates the used CG transmission occasion and/or the unused CG transmission occasion in the part of CG transmission occasions. This avoids a waste of CG transmission occasion resources in the CG period, and can effectively reduce bit overheads of the first indication information.

In this application, "sending information to... (radio access network device)" may be understood as that a destination end of the information is the radio access network device, and may include directly or indirectly sending the information to the radio access network device; and "receiving... information from (radio access network device)" may be understood as that a source end of the information is the radio access network device, and may include directly or indirectly receiving the information from the radio access network device. Information may undergo necessary processing, for example, a format change, between the source end for sending the information and the destination end. However, the destination end may understand valid information from the source end. A similar expression in this application may be understood similarly, and details are not described herein again.

In a possible implementation of the first configuration information, the first configuration information configures a time offset, the part of CG transmission occasions are in a first period, and a start moment of the first period is related to the time offset. In the foregoing implementation, the first period is determined by using the time offset, and the application scope of the first indication information is determined by using the first period, so that the bit overheads of the first indication information can be effectively reduced.

In a possible implementation of the time offset, the time offset may be a sum of a processing delay and a scheduling delay, where the processing delay is a delay in processing, by a base station, the first indication information to obtain information about the used CG transmission occasion and/or the unused CG transmission occasion in the part of CG transmission occasions, and the scheduling delay is a delay in scheduling, by the base station by using the RRC signaling or the DCI to another terminal for use, the unused CG transmission occasion that is in the part of CG transmission occasions and that is indicated by the first indication information. The time offset may be at a granularity of ms, slot, symbol (symbol), or CG PUSCH. In the foregoing implementation, with reference to processing and scheduling capabilities of the base station, the bit overheads of the first indication information can be reduced, and the waste of transmission resources can be effectively avoided.

In another possible implementation of the time offset, the time offset may alternatively be related to distribution information of a data transmission amount, where the distribution information of the data transmission amount may be reported by the terminal to the base station by using the MAC-CE, user assistance information (UE assistance information, UAI), or the UCI, or may be obtained through measurement or perception of the base station. The distribution information of the data transmission amount may be a smallest value of the data transmission amount, and a CG transmission occasion corresponding to the smallest value of the data transmission amount is a used CG transmission occasion. The base station configures the time offset by using the used CG transmission occasion. The time offset may be at the granularity of ms, slot, symbol (symbol), or CG PUSCH. In this manner, the base station can determine the definitely used CG transmission occasion based on the smallest value of the data transmission amount, and a case in which the first indication information indicates the definitely used CG transmission occasion is avoided by using the time offset. In this way, the first indication information fully indicates the CG transmission occasion used in the CG period and/or the CG transmission occasion unused in the CG period, and the bit overheads of the first indication information are effectively reduced.

In another possible implementation of the time offset, the time offset may be the sum of the processing delay and the scheduling delay, or may be related to the distribution information of the data transmission amount. If a number of CG transmission occasions included in the first period that is determined by using the sum of the processing delay and the scheduling delay is greater than a number of CG transmission occasions corresponding to the smallest value of the data transmission amount, the time offset may be the sum of the processing delay and the scheduling delay; or if the number of CG transmission occasions included in the first period that is determined by using the sum of the processing delay and the scheduling delay is less than the number of CG transmission occasions corresponding to the smallest value of the data transmission amount, the time offset may be related to the distribution information of the data transmission amount. Alternatively, if the number of CG transmission occasions included in the first period that is determined by using the sum of the processing delay and the scheduling delay is less than the number of CG transmission occasions corresponding to the smallest value of the data transmission amount, the time offset may be the sum of the processing delay and the scheduling delay; or if the number of CG transmission occasions included in the first period that is determined by using the sum of the processing delay and the scheduling delay is greater than the number of CG transmission occasions corresponding to the smallest value of the data transmission amount, the time offset may be related to the distribution information of the data transmission amount. The time offset may be at the granularity of ms, slot, symbol (symbol), or CG PUSCH. In the foregoing implementation, the first indication information fully indicates the CG transmission occasion used in the CG period and/or the CG transmission occasion unused in the CG period, and the bit overheads of the first indication information can be effectively reduced. In addition, the waste of transmission resources can be effectively avoided.

In a possible implementation of the first period, a start moment of the first period is after a sending moment of the first indication information, an interval between the start moment of the first period and the sending moment of the first indication information is equal to the time offset, and an end moment of the first period is an end moment of the CG period or an end moment of a last CG transmission occasion in the CG period. In the foregoing implementation, the application scope of the first indication information is determined by using the first period, so that the bit overheads of the first indication information can be effectively reduced.

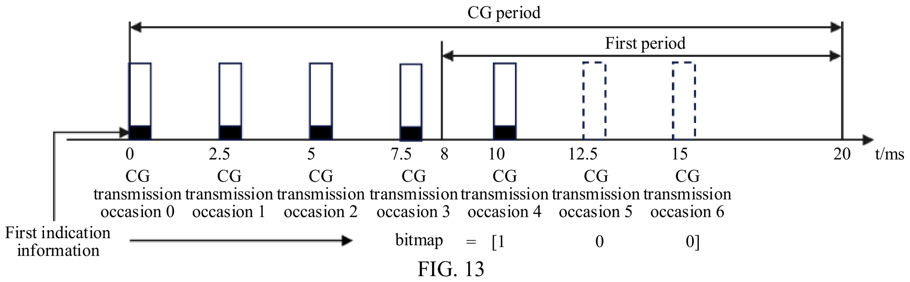

In a possible implementation of the foregoing part of CG transmission occasions, the part of CG transmission occasions may be in the first period. For example, as shown in FIG. 13, seven CG transmission occasions: CG transmission occasions 0 to 6, are configured in a CG period with a CG periodicity of 20 ms, where the CG transmission occasions 0 to 6 are respectively at moments 0, 2.5, 5, 7.5, 10, 12.5, and 15 ms for sending. A rectangle with a solid-line frame represents a used CG transmission occasion, and a rectangle with a dashed-line frame represents an unused CG transmission occasion. First indication information is included in UCI carried on used CG transmission occasions: the CG transmission occasions 0 to 4. First indication information included in UCI (where a black rectangle in the figure is the UCI) carried on the CG transmission occasion 0 is sent at the moment 0 ms, a time offset configured in first configuration information is 8 ms, a start moment of a first period is at a moment 8 ms, and an end moment is at a moment 20 ms. CG transmission occasions in the first period are the CG transmission occasions 4 to 6, and the first indication information indicates, by using a bitmap=[1 0 0], that the CG transmission occasion 4 is used, and the CG transmission occasion 5 and the CG transmission occasion 6 are unused. First indication information included in UCI (where a black rectangle in the figure is the UCI) carried on the CG transmission occasion 1 is sent at the moment 2.5 ms, a time offset configured in first configuration information is 8 ms, a start moment of a first period is at a moment 10.5 ms, and an end moment is at a moment 20 ms. CG transmission occasions in the first period are the CG transmission occasion 5 and the CG transmission occasion 6, and the first indication information indicates, by using a bitmap=[0 0], that the CG transmission occasion 5 and the CG transmission occasion 6 are unused. An indication case of first indication information included in UCI (where a black rectangle in the figure is the UCI) carried on the CG transmission occasion 2, 3, or 4 is similar, and details are not described herein again.

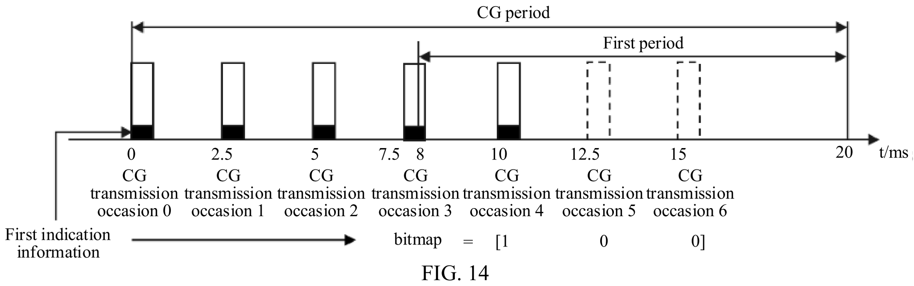

If the start moment of the first period is included in a CG transmission occasion in the CG period, the part of CG transmission occasions in the first period may not include the CG transmission occasion. For example, as shown in FIG. 14, seven CG transmission occasions: CG transmission occasions 0 to 6, are configured in a CG period with a CG periodicity of 20 ms, where the CG transmission occasions 0 to 6 are respectively at moments 0, 2.5, 5, 7.5, 10, 12.5, and 15 ms for sending. A rectangle with a solid-line frame represents a used CG transmission occasion, and a rectangle with a dashed-line frame represents an unused CG transmission occasion. First indication information is included in UCI carried on used CG transmission occasions: the CG transmission occasions 0 to 4. First indication information included in UCI (where a black rectangle in the figure is the UCI) carried on the CG transmission occasion 0 is sent at the moment 0 ms, a time offset configured in first configuration information is 8 ms, a start moment of a first period is at a moment 8 ms, and an end moment is at a moment 20 ms. In addition, the start moment is included in the CG transmission occasion 3, CG transmission occasions in the first period are the CG transmission occasions 4 to 6, and the first indication information indicates, by using a bitmap=[1 0 0], that the CG transmission occasion 4 is used, and the CG transmission occasion 5 and the CG transmission occasion 6 are unused. In the foregoing implementation, the application scope of the first indication information is determined by using the first period, so that the bit overheads of the first indication information can be effectively reduced.

In another possible implementation of the part of CG transmission occasions, the part of CG transmission occasions may alternatively be in a second period, where a start moment of the second period is the sending moment of the first indication information, and an end moment of the second period is the end moment of the CG period or the end moment of the last CG transmission occasion in the CG period. The part of CG transmission occasions in the second period may include a CG transmission occasion including the first indication information, or may not include the CG transmission occasion including the first indication information. This is not limited in this application.

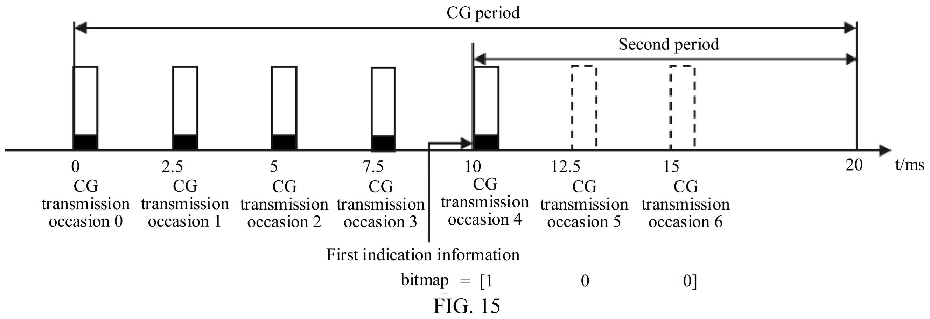

For example, as shown in FIG. 15, seven CG transmission occasions: CG transmission occasions 0 to 6, are configured in a CG period with a CG periodicity of 20 ms, where the CG transmission occasions 0 to 6 are respectively at moments 0, 2.5, 5, 7.5, 10, 12.5, and 15 ms for sending. A rectangle with a solid-line frame represents a used CG transmission occasion, and a rectangle with a dashed-line frame represents an unused CG transmission occasion. First indication information is included in UCI carried on used CG transmission occasions: the CG transmission occasions 0 to 4. First indication information included in UCI (where a black rectangle in the figure is the UCI) carried on the CG transmission occasion 4 is sent at the moment 10 ms, a start moment of a second period is at a moment 10 ms, and an end moment is at a moment 20 ms. CG transmission occasions in the second period are the CG transmission occasions 4 to 6, and the first indication information indicates, by using a bitmap=[1 0 0], that the CG transmission occasion 4 is used, and the CG transmission occasion 5 and the CG transmission occasion 6 are unused. First indication information included in UCI (where a black rectangle in the figure is the UCI) carried on the CG transmission occasion 3 is sent at the moment 7.5 ms, a start moment of a second period is at a moment 7.5 ms, and an end moment is at a moment 20 ms. CG transmission occasions in the second period are the CG transmission occasions 3 to 6, and the first indication information indicates, by using a bitmap=[1 1 0 0], that the CG transmission occasion 3 and the CG transmission occasion 4 are used, and the CG transmission occasion 5 and the CG transmission occasion 6 are unused. An indication case of first indication information included in UCI (where a black rectangle in the figure is the UCI) carried on the CG transmission occasion 0, 1, or 2 is similar, and details are not described herein again.

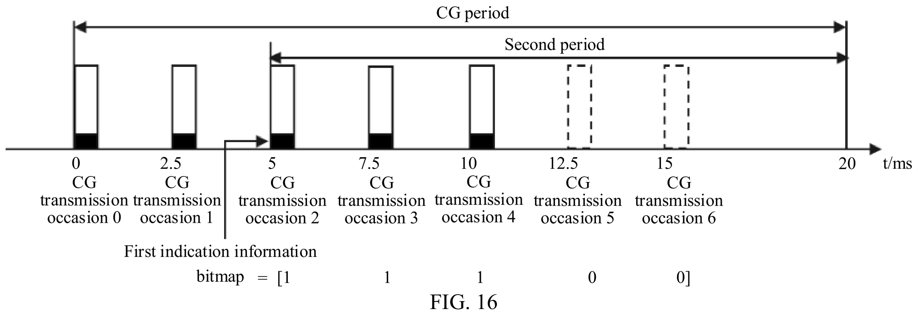

For another example, as shown in FIG. 16, seven CG transmission occasions: CG transmission occasions 0 to 6, are configured in a CG period with a CG periodicity of 20 ms, where the CG transmission occasions 0 to 6 are respectively at moments 0, 2.5, 5, 7.5, 10, 12.5, and 15 ms for sending. A rectangle with a solid-line frame represents a used CG transmission occasion, and a rectangle with a dashed-line frame represents an unused CG transmission occasion. First indication information is included in UCI carried on used CG transmission occasions: the CG transmission occasions 0 to 4. First indication information included in UCI (where a black rectangle in the figure is the UCI) carried on the CG transmission occasion 2 is sent at the moment 5 ms, a start moment of a second period is at a moment 5 ms, and an end moment is at a moment 20 ms. CG transmission occasions in the second period are the CG transmission occasions 2 to 6, and the first indication information indicates, by using a bitmap=[1 1 1 0 0], that the CG transmission occasions 2 to 4 are used, and the CG transmission occasion 5 and the CG transmission occasion 6 are unused. First indication information included in UCI (where a black rectangle in the figure is the UCI) carried on the CG transmission occasion 1 is sent at the moment 2.5 ms, a start moment of a second period is at a moment 2.5 ms, and an end moment is at a moment 20 ms. CG transmission occasions in the second period are the CG transmission occasions 1 to 6, and the first indication information indicates, by using a bitmap=[1 1 1 1 0 0], that the CG transmission occasions 1 to 4 are used, and the CG transmission occasion 5 and the CG transmission occasion 6 are unused. An indication case of first indication information included in UCI (where a black rectangle in the figure is the UCI) carried on the CG transmission occasion 0, 3, or 4 is similar, and details are not described herein again. In the foregoing implementation, a number of bits of the first indication information dynamically changes based on the sending moment of the first indication information, so that the bit overheads of the first indication information can be flexibly and effectively reduced.

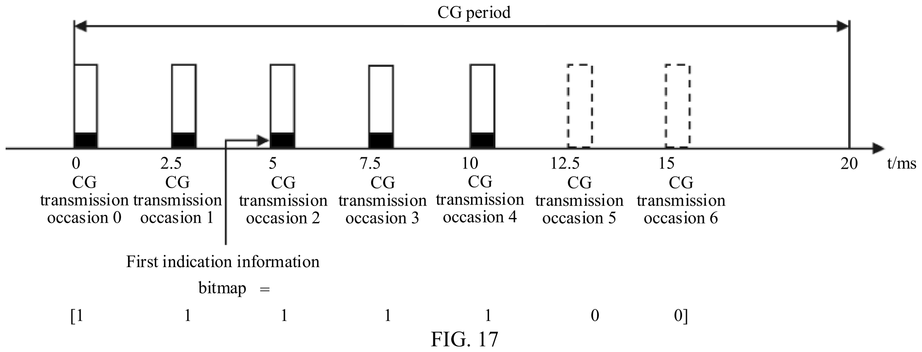

In another possible implementation of the part of CG transmission occasions, the part of CG transmission occasions may alternatively be all CG transmission occasions in the CG period, or all CG transmission occasions except the CG transmission occasion including the first indication information in the CG period. For example, as shown in FIG. 17, seven CG transmission occasions: CG transmission occasions 0 to 6, are configured in a CG period with a CG periodicity of 20 ms, where the CG transmission occasions 0 to 6 are respectively at moments 0, 2.5, 5, 7.5, 10, 12.5, and 15 ms for sending. A rectangle with a solid-line frame represents a used CG transmission occasion, and a rectangle with a dashed-line frame represents an unused CG transmission occasion. First indication information is included in UCI carried on used CG transmission occasions: the CG transmission occasions 0 to 4. First indication information included in UCI (where a black rectangle in the figure is the UCI) carried on the CG transmission occasion 0, the CG transmission occasion 1, the CG transmission occasion 2, the CG transmission occasion 3, or the CG transmission occasion 4 indicates, by using a bitmap=[1 1 1 1 1 0 0], that the CG transmission occasion 0 to 4 are used, and the CG transmission occasion 5 and the CG transmission occasion are unused. In the foregoing implementation, a beneficial effect of fully indicating, by the first indication information, the used CG transmission occasion and/or the unused CG transmission occasion in the CG transmission occasions in the CG period can be achieved.

In a possible implementation of the first indication information, the number of bits of the first indication information is N1, N1 is a positive integer, a number of the part of CG transmission occasions is M1, and M1 is an integer greater than or equal to N1. Optionally, M1 is an integer multiple of N1. In the foregoing implementation, the number of bits of the first indication information is less than or equal to the number of the part of CG transmission occasions, so that the bit overheads of the first indication information can be further reduced.

In a possible implementation in which M1 is an integer multiple of N1, M1=N1, the first indication information indicates, by using the bitmap, the used CG transmission occasion and/or the unused CG transmission occasion in the part of CG transmission occasions, and one bit in the bitmap corresponds to one CG transmission occasion in the part of CG transmission occasions. Values "1" and "0"of the bit respectively indicate that the CG transmission occasion is used and the CG transmission occasion is unused. Alternatively, the values "0" and "1" of the bit respectively indicate that the CG transmission occasion is used and the CG transmission occasion is unused. In the foregoing implementation, the used CG transmission occasion and/or the unused CG transmission occasion in the part of CG transmission occasions may be indicated by one bit in the first indication information, thereby achieving a beneficial effect of fully and accurately indicating the used CG transmission occasion and/or the unused CG transmission occasion in the part of CG transmission occasions.

In another possible implementation in which M1 is an integer multiple of N1, M1=k*N1, and k is an integer greater than 1. The first indication information indicates, by using the bitmap, the used CG transmission occasion and/or the unused CG transmission occasion in the part of CG transmission occasions, and one bit in the bitmap corresponds to k CG transmission occasions in the part of CG transmission occasions. Values "1" and "0" of the bit respectively indicate that the k CG transmission occasions are used and the k CG transmission occasions are unused. Alternatively, the values "0" and "1" of the bit respectively indicate that the k CG transmission occasions are used and the k CG transmission occasions are unused. In the foregoing implementation, the bit overheads of the first indication information can be further reduced.

In another possible implementation of the first indication information, the number of bits of the first indication information is N1, N1 is a positive integer, the number of the part of CG transmission occasions is M1, and M1 is an integer greater than N1. Optionally, M1 is not an integer multiple of N1. In the foregoing implementation, the number of bits of the first indication information is less than the number of the part of CG transmission occasions, so that the bit overheads of the first indication information can be further reduced.

In a possible implementation in which M1 is not an integer multiple of N1, the first indication information indicates, by using the bitmap, the used CG transmission occasion and/or the unused CG transmission occasion in the part of CG transmission occasions, a last bit in the bitmap corresponds to M1-(N1-1)*(ceil(M1/N1)) CG transmission occasions in the part of CG transmission occasions, and one bit other than the last bit in the bitmap corresponds to ceil(M1/N1) CG transmission occasions in the part of CG transmission occasions. Values "1" and "0" of the one bit in the bitmap respectively indicate that the CG transmission occasion corresponding to the bit is used and the CG transmission occasion corresponding to the bit is unused. Alternatively, the values of "0" and "1" of the one bit in the bitmap respectively indicate that the CG transmission occasion corresponding to the bit is used and the CG transmission occasion corresponding to the bit is unused, where ceil(.) is ceiling. For example, the number M1 of the part of CG transmission occasions is 10, the number N1 of bits of the first indication information is 3, and the first indication information indicates, by using a bitmap=[1 1 0], used and unused CG transmission occasions in 10 CG transmission occasions. A 1^{st} bit, a 2^{nd} bit, and a 3^{rd} bit in the bitmap respectively indicate four used transmission occasions, four used transmission occasions, and two unused transmission occasions in the 10 CG transmission occasions. In the foregoing implementation, the bit overheads of the first indication information can be further reduced.

In another possible implementation in which M1 is not an integer multiple of N1, the first indication information indicates, by using the bitmap, the used CG transmission occasion and/or the unused CG transmission occasion in the part of CG transmission occasions, one bit in first (M1 mod N1) bits in the bitmap corresponds to ceil(M1/N1) CG transmission occasions in the part of CG transmission occasions, and one bit other than the first (M1 mod N1) bits in the bitmap corresponds to floor(M1/N1) CG transmission occasions in the part of CG transmission occasions. Values "1" and "0" of the one bit in the bitmap respectively indicate that the CG transmission occasion corresponding to the bit is used and the CG transmission occasion corresponding to the bit is unused. Alternatively, the values of "0" and "1" of the one bit in the bitmap respectively indicate that the CG transmission occasion corresponding to the bit is used and the CG transmission occasion corresponding to the bit is unused, where ceil(.) is ceiling, floor(.) is floor, and mod is modulo. For example, the number M1 of the part of CG transmission occasions is 10, the number N1 of bits of the first indication information is 3, and the first indication information indicates, by using a bitmap=[1 10], used and unused CG transmission occasions in 10 CG transmission occasions. A 1^{st} bit, a 2^{nd} bit, and a 3^{rd} bit in the bitmap respectively indicate four used transmission occasions, three used transmission occasions, and three unused transmission occasions in the 10 CG transmission occasions. In the foregoing implementation, the bit overheads of the first indication information can be further reduced.

In another possible implementation of the first configuration information, the first configuration information configures a number N2 of bits of the first indication information, and N2 is a positive integer. One bit in the N2 bits of the first indication information indicates that one or more CG transmission occasions in the part of CG transmission occasions are used or unused. For example, each bit in the N2 bits of the first indication information indicates that the one or more CG transmission occasions in the part of CG transmission occasions are used or unused. In the foregoing implementation, the base station may configure the number of bits of the first indication information by using the first configuration information based on the capability of the base station to process the first indication information and the capability of the base station to schedule, to another terminal for use, the unused CG transmission occasion indicated by the first indication information, so that the number of bits of the first indication information is configured without delivering the foregoing capabilities of the base station, thereby effectively avoiding exposure of capability information of the base station.

In a possible implementation of the part of CG transmission occasions, the part of CG transmission occasions are last M2 CG transmission occasions in the CG period, and M2 is an integer greater than or equal to N2. In the foregoing implementation, the number of bits of the first indication information is less than or equal to the number of the part of CG transmission occasions, so that the bit overheads of the first indication information can be further reduced.

In a possible implementation of the first indication information, optionally, M2 is an integer multiple of N2. In the foregoing implementation, the number of bits of the first indication information is less than or equal to the number of the part of CG transmission occasions, so that the bit overheads of the first indication information can be further reduced.

In a possible implementation in which M2 is an integer multiple of N2, M2=N2, the first indication information indicates, by using the bitmap, the used CG transmission occasion and/or the unused CG transmission occasion in the part of CG transmission occasions, and one bit in the bitmap corresponds to one CG transmission occasion in the part of CG transmission occasions. Values "1" and "0"of the bit respectively indicate that the CG transmission occasion is used and the CG transmission occasion is unused. Alternatively, the values "0" and "1" of the bit respectively indicate that the CG transmission occasion is used and the CG transmission occasion is unused. In the foregoing implementation, the used CG transmission occasion and/or the unused CG transmission occasion in the part of CG transmission occasions may be indicated by one bit in the first indication information, thereby achieving a beneficial effect of fully and accurately indicating the used CG transmission occasion and/or the unused CG transmission occasion in the part of CG transmission occasions.

In another possible implementation in which M2 is an integer multiple of N2, M2=k*N2, and k is an integer greater than 1. The first indication information indicates, by using the bitmap, the used CG transmission occasion and/or the unused CG transmission occasion in the part of CG transmission occasions, and one bit in the bitmap corresponds to k CG transmission occasions in the part of CG transmission occasions. Values "1" and "0" of the bit respectively indicate that the k CG transmission occasions are used and the k CG transmission occasions are unused. Alternatively, the values "0" and "1" of the bit respectively indicate that the k CG transmission occasions are used and the k CG transmission occasions are unused. In the foregoing implementation, the bit overheads of the first indication information can be further reduced.

In another possible implementation of the first indication information, optionally, M2 is not an integer multiple of N2. In the foregoing implementation, the number of bits of the first indication information is less than the number of the part of CG transmission occasions, so that the bit overheads of the first indication information can be further reduced.

In a possible implementation in which M2 is not an integer multiple of N2, the first indication information indicates, by using the bitmap, the used CG transmission occasion and/or the unused CG transmission occasion in the part of CG transmission occasions, a last bit in the bitmap corresponds to M2-(N2-1)*(ceil(M2/N2)) CG transmission occasions in the part of CG transmission occasions, and one bit other than the last bit in the bitmap corresponds to ceil(M2/N2) CG transmission occasions in the part of CG transmission occasions. Values "1" and "0" of the one bit in the bitmap respectively indicate that the CG transmission occasion corresponding to the bit is used and the CG transmission occasion corresponding to the bit is unused. Alternatively, the values of "0" and "1" of the one bit in the bitmap respectively indicate that the CG transmission occasion corresponding to the bit is used and the CG transmission occasion corresponding to the bit is unused, where ceil(.) is ceiling. For example, the number M2 of the part of CG transmission occasions is 10, the number N2 of bits of the first indication information is 3, and the first indication information indicates, by using a bitmap=[1 1 0], used and unused CG transmission occasions in 10 CG transmission occasions. A 1^{st} bit, a 2^{nd} bit, and a 3^{rd} bit in the bitmap respectively indicate four used transmission occasions, four used transmission occasions, and two unused transmission occasions in the 10 CG transmission occasions. In the foregoing implementation, the bit overheads of the first indication information can be further reduced.

In another possible implementation in which M2 is not an integer multiple of N2, the first indication information indicates, by using the bitmap, the used CG transmission occasion and/or the unused CG transmission occasion in the part of CG transmission occasions, one bit in first (M2 mod N2) bits in the bitmap corresponds to ceil(M2/N2) CG transmission occasions in the part of CG transmission occasions, and one bit other than the first (M2 mod N2) bits in the bitmap corresponds to floor(M2/N2) CG transmission occasions in the part of CG transmission occasions. Values "1" and "0" of the one bit in the bitmap respectively indicate that the CG transmission occasion corresponding to the bit is used and the CG transmission occasion corresponding to the bit is unused. Alternatively, the values of "0" and "1" of the one bit in the bitmap respectively indicate that the CG transmission occasion corresponding to the bit is used and the CG transmission occasion corresponding to the bit is unused, where ceil(.) is ceiling, floor(.) is floor, and mod is modulo. For example, the number M2 of the part of CG transmission occasions is 10, the number N2 of bits of the first indication information is 3, and the first indication information indicates, by using a bitmap=[1 10], used and unused CG transmission occasions in 10 CG transmission occasions. A 1^{st} bit, a 2^{nd} bit, and a 3^{rd} bit in the bitmap respectively indicate four used transmission occasions, three used transmission occasions, and three unused transmission occasions in the 10 CG transmission occasions. In the foregoing implementation, the bit overheads of the first indication information can be further reduced.

In another possible implementation of the first configuration information, the first configuration information may be further used for configuring the time offset and the number of bits of the first indication information. A number of CG transmission occasions included in the first period determined based on the time offset is M3, and the number of bits of the first indication information is N3. If M3<N3, the first indication information indicates a used CG transmission occasion and/or an unused CG transmission occasion in last M3 CG transmission occasions in the CG period; or if M3>N3, the first indication information indicates a used CG transmission occasion and/or an unused CG transmission occasion in last N3 CG transmission occasions in the CG period. Alternatively, if M3<N3, the first indication information indicates the used CG transmission occasion and/or the unused CG transmission occasion in the last N3 CG transmission occasions in the CG period; or if M3>N3, the first indication information indicates the used CG transmission occasion and/or the unused CG transmission occasion in the last M3 CG transmission occasions in the CG period. In the foregoing implementation, with reference to the processing capability of the base station, a beneficial effect of effectively reducing the bit overheads of the first indication information is achieved.

It may be understood that this embodiment of this application is not limited to an XR transmission service and a video transmission service, and another service (for example, a periodic service) is also applicable.

Corresponding to the method provided in the foregoing method embodiments, embodiments of this application further provide a corresponding apparatus, including corresponding modules configured to execute the foregoing embodiments. The module may be software, hardware, or a combination of software and hardware.

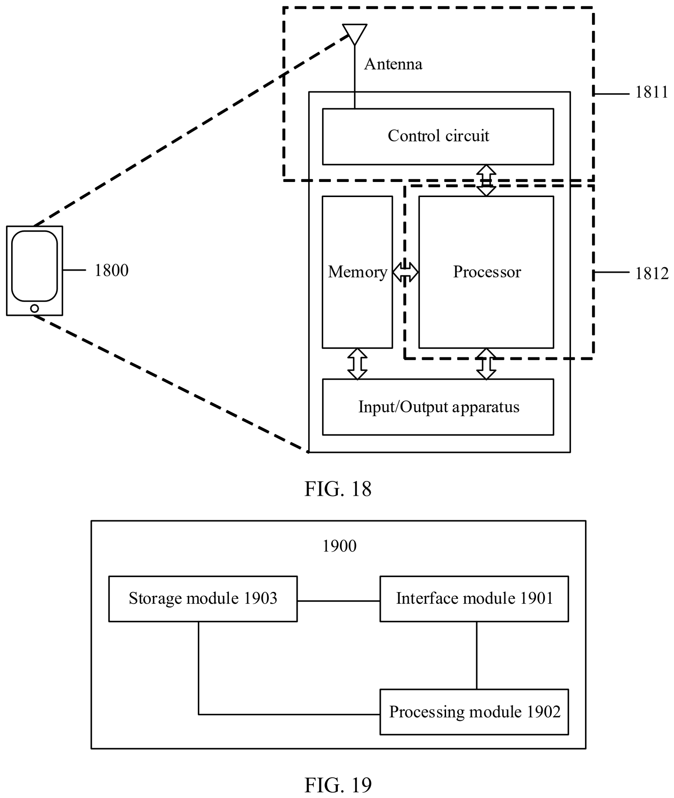

FIG. 18 is a diagram of a structure of a terminal. The terminal is applicable to a scenario shown in FIG. 1, FIG. 2, FIG. 3, FIG. 4, or FIG. 5. The terminal or a module in the terminal may perform the foregoing method 1200 and various possible implementations. For ease of description, FIG. 18 shows only main modules of the terminal. As shown in FIG. 18, the terminal 1800 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and data. A radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal is powered on, the processor may read the software program in a storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of the electromagnetic wave through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 18 shows only one memory and one processor. In an actual terminal, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 18. A person skilled in the art may understand that the baseband processor and the central processing unit each may alternatively be independent processors, and are interconnected by using a technology like a bus. A Person skilled in the art may understand that the terminal may include a plurality of baseband processors to adapt to different network standards, and the terminal may include a plurality of central processing units to enhance a processing capability of the terminal. All the modules of the terminal may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a receiving function and a sending function may be considered as a transceiver unit 1811 of the terminal 1800, and the processor having a processing function may be considered as a processing unit 1812 of the terminal 1800. As shown in FIG. 18, the terminal 1800 includes the transceiver unit 1811 and the processing unit 1812. The transceiver unit may also be referred to as a transceiver, a transceiver machine, a transceiver apparatus, or the like. Optionally, a component configured to implement a receiving function in the transceiver unit 1811 may be considered as a receiving unit, and a component configured to implement a sending function in the transceiver unit 1811 may be considered as a sending unit. That is, the transceiver unit 1811 includes the receiving unit and the sending unit. For example, the receiving unit may also be referred to as a receive machine, a receiver, a receiving circuit, or the like, and the sending unit may also be referred to as a transmit machine, a transmitter, a transmitting circuit, or the like. Optionally, the receiving unit and the sending unit may be one integrated unit, or may be a plurality of independent units. The receiving unit and the sending unit may be in one geographical position, or may be distributed in a plurality of geographical positions. As shown in FIG. 19, another embodiment of this application provides an apparatus 1900. The apparatus may be a terminal, or may be a module (for example, an integrated circuit or a chip) used in the terminal. Alternatively, the apparatus may be a radio access network device, may be a module (for example, an integrated circuit or a chip) used in the radio access network device, or may be a logical node, a logical module, or software that can implement all or some functions of the radio access network device. The apparatus may alternatively be another communication module. For example, the apparatus 1900 may implement functions of the radio access network device in the method 1200 and various possible implementations, or the apparatus 1900 may implement functions of the terminal in the method 1200 and various possible implementations. The apparatus 1900 may include an interface module 1901 (or referred to as an interface unit) and a processing module 1902 (or referred to as a processing unit), and may further include a storage module 1903 (or referred to as a storage unit).

In a possible design, one or more modules in FIG. 19 may be implemented by one or more processors, may be implemented by one or more processors and one or more memories, may be implemented by one or more processors and one or more transceivers, or may be implemented by one or more processors, one or more memories, and one or more transceivers. This is not limited in embodiments of this application. The processor, the memory, and the transceiver may be disposed separately, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment. Alternatively, the apparatus has a function of implementing the radio access network device described in embodiments of this application. For example, the apparatus includes a corresponding module, unit, or means (means) used for the radio access network device to perform the steps that are related to the radio access network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiment.

In a possible design, the apparatus 1900 includes the interface module 1901 and the processing module 1902. For example, the apparatus 1900 may be a terminal, may be a module (for example, a processor, a chip, or a chip system) used in the terminal, or may be a logical node, a logical module, or software that can implement all or some functions of the terminal. The processing module 1902 is configured to obtain first configuration information, where the first configuration information is used for configuring an application scope of first indication information, the application scope of the first indication information is a part of CG transmission occasions in a CG period, and the first indication information indicates a used CG transmission occasion and/or an unused CG transmission occasion in the part of CG transmission occasions. The interface module 1901 is configured to send the first indication information.

In a possible implementation of the apparatus 1900, the first configuration information configures a time offset, the part of CG transmission occasions are in a first period, and a start moment of the first period is related to the time offset.

In a possible implementation of the apparatus 1900, the start moment of the first period is after a sending moment of the first indication information, an interval between the start moment of the first period and the sending moment of the first indication information is equal to the time offset, and an end moment of the first period is an end moment of the CG period or an end moment of a last CG transmission occasion in the CG period.

In a possible implementation of the apparatus 1900, a number of bits of the first indication information is N1, N1 is a positive integer, a number of the part of CG transmission occasions is M1, and M1 is an integer greater than or equal to N1.

In a possible implementation of the apparatus 1900, M1 is an integer multiple of N1.

In a possible implementation of the apparatus 1900, the first configuration information configures a number N2 of bits of the first indication information, and N2 is a positive integer.

In a possible implementation of the apparatus 1900, the part of CG transmission occasions are last M2 CG transmission occasions in the CG period, and M2 is an integer greater than or equal to N2.

In a possible implementation of the apparatus 1900, M2 is an integer multiple of N2.

In a possible design, the apparatus 1900 includes an interface module 1901 and a processing module 1902. For example, the apparatus 1900 may be a radio access network device, may be a module (for example, a processor, a chip, or a chip system) used in the radio access network device, or may be a logical node, a logical module, or software that can implement all or some functions of the radio access network device. The interface module 1901 is configured to send first configuration information, where the first configuration information is used for configuring an application scope of first indication information, and the application scope of the first indication information is a part of CG transmission occasions in a CG period. The processing module 1902 is configured to obtain the first indication information, where the first indication information indicates a used CG transmission occasion and/or an unused CG transmission occasion in the part of CG transmission occasions.

In a possible implementation of the apparatus 1900, the first configuration information configures a time offset, the part of CG transmission occasions are in a first period, and a start moment of the first period is related to the time offset.

In a possible implementation of the apparatus 1900, the start moment of the first period is after a sending moment of the first indication information, an interval between the start moment of the first period and the sending moment of the first indication information is equal to the time offset, and an end moment of the first period is an end moment of the CG period or an end moment of a last CG transmission occasion in the CG period.

In a possible implementation of the apparatus 1900, a number of bits of the first indication information is N1, N1 is a positive integer, a number of the part of CG transmission occasions is M1, and M1 is an integer greater than or equal to N1.

In a possible implementation of the apparatus 1900, M1 is an integer multiple of N1.

In a possible implementation of the apparatus 1900, the first configuration information configures a number N2 of bits of the first indication information, and N2 is a positive integer.

In a possible implementation of the apparatus 1900, the part of CG transmission occasions are last M2 CG transmission occasions in the CG period, and M2 is an integer greater than or equal to N2.

In a possible implementation of the apparatus 1900, M2 is an integer multiple of N2.

It may be understood that for beneficial effects corresponding to the apparatus 1900 and various possible implementations, refer to the descriptions in the foregoing method embodiments or content in the summary. Details are not described herein again.

Optionally, the apparatus 1900 may further include a storage module 1903, configured to store data or instructions (which may also be referred to as code or a program). The other modules may interact with or be coupled to the storage module, to implement corresponding methods or functions. For example, the processing module 1902 may read the data or the instructions in the storage module 1903, so that the apparatus 1900 implements the method in the foregoing embodiments.

In an example, the module in the foregoing apparatus may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the apparatus may be implemented by a processing element scheduling a program, the processing element may be a general-purpose processor, for example, a central processing unit (central processing unit, CPU) or another processor that can invoke the program. For still another example, the units may be integrated and implemented in a form of a system-on-a-chip (system-on-a-chip, SoC).

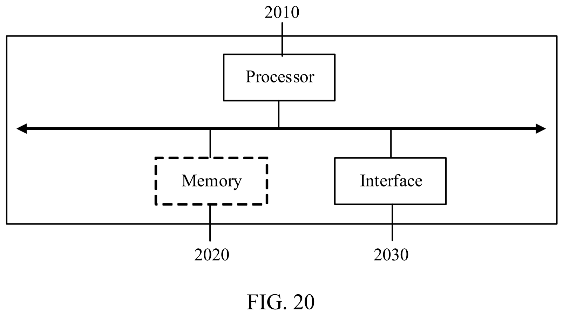

FIG. 20 is a diagram of an apparatus according to an embodiment of this application. The apparatus may be configured to implement the method 1200 and various possible implementations. As shown in FIG. 20, the apparatus includes a processor 2010 and an interface 2030. The processor 2010 is coupled to the interface 2030. The interface 2030 is configured to communicate with another module or device. The interface 2030 may be a transceiver or an input/output interface. The interface 2030 may be, for example, an interface circuit. Optionally, the apparatus further includes a memory 2020, configured to store instructions executed by the processor 2010, input data required by the processor 2010 to run the instructions, or data generated after the processor 2010 runs the instructions.

The method 1200 and various possible implementations may be implemented by the processor 2010 by invoking a program or the instructions stored in the memory 2020. The memory 2020 may be inside the apparatus, or may be outside the apparatus. This is not limited in this application.

Optionally, a function/implementation process of the interface module 1901 and the processing module 1902 in FIG. 19 may be implemented by the processor 2010 in the apparatus shown in FIG. 20. Alternatively, a function/implementation process of the processing module 1902 in FIG. 19 may be implemented by the processor 2010 in the apparatus shown in FIG. 20, and a function/implementation process of the interface module 1901 in FIG. 19 may be implemented by the interface 2030 in the apparatus shown in FIG. 20. For example, the function/implementation process of the interface module 1901 may be implemented by the processor invoking program instructions in the memory to drive the interface 2030.

When the apparatus is a chip used in a terminal, the chip in the terminal implements functions of the terminal in the foregoing method embodiments. The chip receives information from another module (for example, a radio frequency module or an antenna) in the terminal, where the information is from another terminal or a radio access network device. Alternatively, the chip sends information to another module (for example, a radio frequency module or an antenna) in the terminal, where the information is sent by the terminal to another terminal or a radio access network device.

When the apparatus is a chip used in a radio access network device, the chip implements functions of the radio access network device in the foregoing method embodiments. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

A person of ordinary skill in the art may understand that various numbers such as first and second in this application are merely used for differentiation for ease of description, and are not used to limit the scope of embodiments of this application or represent a sequence. "And/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes a singular item (piece) or any combination of plural items (pieces). For example, at least one of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

The steps of the methods described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk, a removable disk, or a storage medium in any other form in the art. For example, the storage medium may connect to a processor, so that the processor may read information from the storage medium and write information to the storage medium. Optionally, the storage medium may be integrated into a processor. The processor and the storage media may be disposed in an ASIC.

This application further provides a computer-readable medium. The computer-readable medium stores a computer program. When the computer program is executed by a computer, functions of any one of the foregoing method embodiments are implemented.

This application further provides a computer program product. When the computer program product is executed by a computer, functions of any one of the foregoing method embodiments are implemented. For same or similar parts in embodiments of this application, refer to each other. In embodiments of this application and implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
obtaining first configuration information, wherein the first configuration information is used for configuring an application scope of first indication information, the application scope of the first indication information is a part of configured grant CG transmission occasions in a CG period, and the first indication information indicates a used CG transmission occasion and/or an unused CG transmission occasion in the part of CG transmission occasions; and
sending the first indication information.

2. The method according to claim 1, wherein the first configuration information configures a time offset, the part of CG transmission occasions are in a first period, and a start moment of the first period is related to the time offset.

3. The method according to claim 2, wherein the start moment of the first period is after a sending moment of the first indication information, an interval between the start moment of the first period and the sending moment of the first indication information is equal to the time offset, and an end moment of the first period is an end moment of the CG period or an end moment of a last CG transmission occasion in the CG period.

4. The method according to claim 2 or 3, wherein a number of bits of the first indication information is N1, N1 is a positive integer, a number of the part of CG transmission occasions is M1, and M1 is an integer greater than or equal to N1.

5. The method according to claim 4, wherein M1 is an integer multiple of N1.

6. The method according to claim 1, wherein the first configuration information configures a number N2 of bits of the first indication information, and N2 is a positive integer.

7. The method according to claim 6, wherein the part of CG transmission occasions are last M2 CG transmission occasions in the CG period, and M2 is an integer greater than or equal to N2.

8. The method according to claim 7, wherein M2 is an integer multiple of N2.

9. The method according to any one of claims 1to 8, wherein the part of CG transmission occasions are subsequent CG transmission occasions other than a CG transmission occasion on which the first indication information is sent.

10. A communication method, comprising:
sending first configuration information, wherein the first configuration information is used for configuring an application scope of first indication information, and the application scope of the first indication information is a part of configured grant CG transmission occasions in a CG period; and
obtaining the first indication information, wherein the first indication information indicates a used CG transmission occasion and/or an unused CG transmission occasion in the part of CG transmission occasions.

11. The method according to claim 10, wherein the first configuration information configures a time offset, the part of CG transmission occasions are in a first period, and a start moment of the first period is related to the time offset.

12. The method according to claim 11, wherein the start moment of the first period is after a sending moment of the first indication information, an interval between the start moment of the first period and the sending moment of the first indication information is equal to the time offset, and an end moment of the first period is an end moment of the CG period or an end moment of a last CG transmission occasion in the CG period.

13. The method according to claim 11 or 12, wherein a number of bits of the first indication information is N1, N1 is a positive integer, a number of the part of CG transmission occasions is M1, and M1 is an integer greater than or equal to N1.

14. The method according to claim 13, wherein M1 is an integer multiple of N1.

15. The method according to claim 10, wherein the first configuration information configures a number N2 of bits of the first indication information, and N2 is a positive integer.

16. The method according to claim 15, wherein the part of CG transmission occasions are last M2 CG transmission occasions in the CG period, and M2 is an integer greater than or equal to N2.

17. The method according to claim 16, wherein M2 is an integer multiple of N2.

18. The method according to any one of claims 10 to 17, wherein the part of CG transmission occasions are subsequent CG transmission occasions other than a CG transmission occasion on which the first indication information is obtained.

19. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9.

20. A communication apparatus, comprising a processor, wherein the processor is coupled to a memory, the memory is configured to store a program or instructions, and when the program or the instructions are executed by the processor, the apparatus is enabled to perform the method according to any one of claims 10 to 18.

21. A computer-readable storage medium, wherein the computer-readable storage medium stores instructions, and when the instructions are executed, the method according to any one of claims 1 to 9 is performed, or the method according to any one of claims 10 to 18 is performed.

22. A computer program product, comprising computer program code, wherein when the computer program code is run, the method according to any one of claims 1 to 9 is implemented, or the method according to any one of claims 10 to 18 is implemented.
